# EUROPÄISCHE PATENTSCHRIFT

(11) **EP 2 350 596 B1**
(45) Veröffentlichungstag und Bekanntmachung des Hinweises auf die Patenterteilung: **07.10.2015**
(21) Anmeldenummer: 09781727.4
(22) Anmeldetag: 12.08.2009
(51) Int. Cl.: G01L 19/14, G01L 19/06

(54) **RELATIVDRUCKSENSOR**
RELATIVE PRESSURE SENSOR
CAPTEUR DE PRESSION RELATIVE

(30) Priorität: 24.10.2008 DE 102008043175
(43) Veröffentlichungstag der Anmeldung: 03.08.2011
(73) Patentinhaber: Endress+Hauser GmbH+Co. KG, 79689 Maulburg (DE)
(72) Erfinder: THAM, Anh Tuan, 10243 Berlin (DE); PÄßLER, Frank, 12163 Berlin (DE); BUDER, Ulrich, 12107 Berlin (DE); PARROTTO, Davide, 79576 Weil am Rhein (DE); KRUSEMARK, Olaf, 34131 Kassel (DE)
(74) Vertreter: Andres, Angelika Maria
(86) Internationale Anmeldenummer: PCT/EP2009/060410
(87) Internationale Veröffentlichungsnummer: WO 2010/046148

(56) Entgegenhaltungen:
- EP-A- 1 061 351
- EP-A- 1 070 948
- WO-A-03/058186
- DE-A1- 10 227 479
- DE-A1- 10 316 033
- DE-A1-102004 048 367

## Beschreibung

Die vorliegende Erfindung betrifft einen Relativdrucksensor insbesondere einen Realtivdrucksensor mit verbesserter Feuchtefestigkeit.

Ein gattungsgemäßer Relativdrucksensor zum Erfassen eines Mediendrucks im Verhältnis zum umgebenden Atmosphärendruck, umfasst eine Druckmesszelle mit einer Messmembran und einem Sockel, wobei die dem Sockel abgewandte Seite der Messmembran mit dem Mediendruck beaufschlagbar ist, und wobei der Sockel eine Referenzluftöffnung aufweist, durch welche die dem Sockel zugewandte Seite mit dem Atmosphärendruck in der Umgebung des Relativdrucksensors beaufschlagbar ist; einen Trägerkörper, durch welchen ein Referenzluftkanal zwischen einem ersten Oberflächenabschnitt und einem zweiten Oberflächenabschnitt des Trägerkörpers verläuft, wobei die Druckmesszelle an dem Trägerkörper mit einer, druckfesten Klebung fixiert ist, wobei die Referenzluftöffnung mit dem Referenzluftkanal kommuniziert um einen Referenzluftpfad zur Messmembran zu bilden, wobei die Klebung den Referenzluftpfad umschließt.

Ein solche montage der Druckmesszelle ist beispielsweise im WIKA-Handbuch Druck- und Temperaturmesstechnik, Seite 92 - 93, (ISBN 3-9804074-0-3) aus dem Jahr 1995 offenbart.

Die Klebung ist drucktragend, d.h. sie muss die Kraft, welche aufgrund der Differenz zwischen dem Mediendruck und dem Atmosphärendruck auf die Druckmesszelle wirkt im wesentlichen ohne plastische Verformung aufnehmen.

Für drucktragende Verbindungen im Bereich der Aufbau- und Verbindungstechnik von Drucksensoren werden Klebstoffe benötigt, die sich durch Kriechfreiheit und hohe Endfestigkeit auszeichnen. Geeignete Klebstoffe, beispielsweise Epoxyd-Klebstoffe.

Eine Veränderung der mechanischen Eigenschaften der Klebung könnte aber zu veränderten mechanischen Spannungen am Sockel führen, die auf die Messmembran übertragen werden.

Insoweit als die Referenzluft naturgemäß einen veränderlichen Wassergehalt hat, erweist es sich als Problem, dass die genannten Klebstoffe und deren Grenzflächen zu anderen Materialien eine hohe Feuchteempfindlichkeit aufweisen. Eine Feuchtebeaufschlagung der Klebung mit den damit verbundenen Änderungen von Klebstoffeigenschaften kann daher eine Verfälschung der gemessenen Druckwerte zur Folge haben.

Hydrophobe, feuchteundurchlässige Kleb- bzw. Dichtstoffe wie z.B. Silikonkautschuk, eigenen sich hingegen bei hohen Druckbelastungen aufgrund ihrer geringen Festigkeit bzw. ihrer Plastizität nicht zu einer formstabilen drucktragenden, dichten Verklebung der Druckmesszelle mit dem Trägerkörper.

Die Offenlegungsschrift DE 10 2004 048367 A1 offenbart ein Verfahren zur Befüllung eines Druckmessaufnehmers mit einer Flüssigkeit, die dazu dient, einen auf eine Trennmembran einwirkenden Druck auf einen im Druckmessaufnehmer befindlichen Drucksensor zu übertragen. Der Druckmessaufnehmer kann ein Relativdruckmessaufnehmer mit einem Halbleitersensor sein, wobei der Halbleitersensor mittels eines Grundkörpers auf einem metallischen Träger befestigt ist.

Die Offenlegungsschrift EP 1 061 351 A1 offenbart einen kapazitiven Relativdrucksensor, dessen Elektroden hydrophobiert sind um eine Feuchteabhängigkeit der Kapazität zwischen den Elektroden zu verringern.

Die Offenlegungsschrift DE 10 2006 013414 A1 offenbart einen Relativdrucksensor mit einem Halbleiterbauelement auf einem durchbohrten Glassockel und einem damit verklebten Trägerrohr. Durch das Trägerrohr und den Glassockel kann das Halbleiterbauelement mit einem Druck beaufschlagt werden. Zum Schutz der Klebung und der dem sockelseitigen Oberflächen des Halbleiterbauelements vor aggressiven Druckübertragungsmedien ist ein Fluor-Kohlenstoff-Film vorgesehen.

Die Offenlegungsschrift DE 10 2007 015397 A1 offenbart einen Relativdrucksensor, der ein Halbleiterbauelement auf einem Glassockel und einem Träger aufweist, wobei der Glassockel insbesondere durch Löten oder Kleben mit dem Träger verbunden ist. Durch Bohrungen in Träger und Sockel kann das Halbleiterbauelement mit einem Druck beaufschlagt werden. Der Glassockel ist aufgrund herstellungsbedingter Mikrorisse feuchteempfindlich. Um ihn vor Feuchtigkeit zu schützen, ist ein Schutzfilm aufgebracht, welche insbesondere Silane enthält.

Die genannten Filme bieten jedoch nur einen begrenzten Schutz gegen Feuchte an drucktragenden Klebern.

Es ist daher die Aufgabe der vorliegenden Erfindung einen Relativdrucksensor bereitzustellen, der die beschriebenen Nachteile überwindet.

Die Aufgabe wird erfindungsgemäß gelöst durch den Relativdrucksensor gemäß dem unabhängigen Patentanspruch 1.

Der erfindungsgemäße Relativdrucksensor ist dadurch gekennzeichnet, dass er weiterhin ein Schirmelement aufweist, welches die Klebung vor einem unmittelbaren Kontakt mit der Referenzluft schützt, wobei das Schirmelement ein Rohr umfasst, welches sich durch die Klebung erstreckt.

Das Rohr kann nach einer Weiterbildung der Erfindung insbesondere ein Fortsatz des Sockels sein, wobei die Referenzluftöffnung des Sockels durch das Rohr verläuft.

Die Druckmesszelle kann weiterhin eine axiale Anschlagfläche aufweisen, welche im wesentlichen senkrecht zur Achse des Rohrs bzw. der Referenzluftöffnung verläuft, und welche ggf. mit der zwischenliegenden Klebung die Position der Druckmesszelle bezüglich des Trägerkörpers definiert.

Das Rohr kann sich in einer Weiterbildung der Erfindung durch den Trägerkörper erstrecken.

Das Rohr kann gemäß einer Weiterbildung der Erfindung an seinem der Messzelle abgewandten Endabschnitt mit einem Schlauch, beispielsweise einem Silikonschlauch, verbunden sein, durch den die Referenzluft zugeführt wird

Nach einer Weiterbildung der Erfindung kann der Trägerkörper einen metallischen Werkstoff aufweisen.

Nach einer zweiten Ausgestaltung der Erfindung kann das Schirmelement einen hülsenförmigen Fortsatz aufweisen, welcher den Referenzluftpfad umschließt, und welcher sich von dem Trägerkörper in die Referenzluftöffnung hinein erstreckt.

Der Trägerkörper kann weiterhin eine axiale Anschlagfläche aufweisen, welche im wesentlichen senkrecht zur Achse des hülsenförmigen Fortsatzes bzw. der Referenzluftöffnung verläuft, und welche ggf. mit der zwischen liegenden Klebung die Position der Druckmesszelle bezüglich des Trägerkörpers definiert. Zudem kann der Sockel bei dieser Ausgestaltung eine zweite axiale, ringförmige Anschlagfläche aufweisen, welche eine axiale Bezugsposition für die Stirnfläche des hülsenförmigen Fortsatzes bildet. Dies kann dadurch erreicht werden, dass der Sockel bis zur Anschlagsfläche eine Bohrung mit einem Durchmesser aufweist, der größer ist als der Außendurchmesser des hülsenförmigen Fortsatzes, und das sich von der Anschlagfläche eine Bohrung mit einem kleineren Durchmesser als der Außendurchmesser des hülsenförmigen Fortsatzes durch den Sockel erstreckt.

Die Klebung kann nach einer Weiterbildung der Erfindung ein Epoxydharz aufweisen. Das Schirmelement kann nach einer Ausgestaltung der Erfindung beispielsweise ein hydrophobes Polymer umfassen, insbesondere ein Silikonpolymer, mit welchem beispielsweise ein direkter Kontakt, zwischen dem Referenzluftpfad und der Klebung unterbrochen wird.

Insbesondere bei der zweiten Ausgestaltung der Erfindung kann zwischen der Stirnfläche des hülsenförmigen Fortsatzes und der zweiten Axialen Anschlagfläche ein ringförmiges Schirmelement aus Silikonkautschuk angeordnet sein, um die außerhalb des Schirmelements verlaufende, ringförmige Klebung vor dem Referenzluftpfad zu schützen.

Die Druckmesszelle kann insbesondere einen Halbleitersensor mit einem piezoresistiven Wandler, einem kapazitiven Wandler oder einem Wandler mit einem optischen oder mechanischen Resonator umfassen.

Der Sockel kann in einer Weiterbildung der Erfindung Glas oder einen Halbleiter aufweisen.

Der erfindungsgemäße Relativdrucksensor kann weiterhin einen hydraulischen Druckmittler umfassen mit einem Druckmittlerkörper und einer flexiblen Trennmembran, die an einer Oberfläche des Druckmittlerkörpers unter Bildung einer Druckkammer zwischen dem Druckmittlerkörper und der Trennmembran befestigt ist, wobei der Druckmittlerkörper ferner eine Messzellenkammer aufweist, in welcher die Druckmesszelle angeordnet ist, wobei sich zwischen der Druckkammer und der Messzellenkammer ein hydraulischer Pfad erstreckt, über den die erste Seite der Messmembran mit dem Mediendruck, der auf die Trennmembran einwirkt, beaufschagbar ist.

Die Erfindung wird nun anhand der in den Figuren gezeigten Ausführungsbeispiele erläutert. Es zeigt:
- Fig. 1:: einen Längsschnitt durch ein erstes Ausführungsbeispiel eines erfindungsgemäßen Relativdrucksensors;
- Fig. 2:: einen Längsschnitt durch einen Relativdrucksensor nach dem Stand der Technik;
- Fig. 3:: einen Längsschnitt durch ein zweites Ausführungsbeispiel eines erfindungsgemäßen Relativdrucksensors.

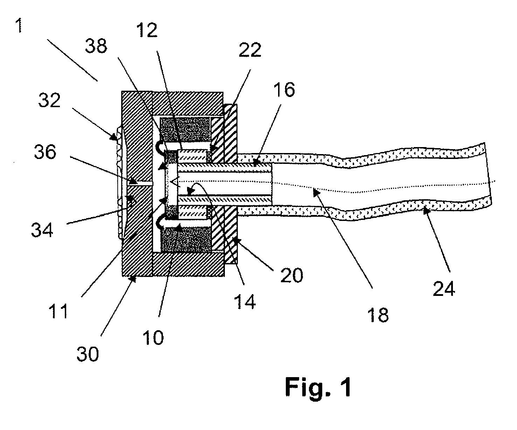

Der in Fig. 1 gezeigte erfindungsgemäße Relativdrucksensor 1 umfasst eine Druckmesszelle 10, die einen piezoresistiven Halbleiterwandlerkern mit einer Messmembran 11 umfasst, wobei der Halbleitersensor mittels anodischen Bondens in seinem Randbereich mit einem Sockel 12 verbunden ist, wobei der Sockel aus Glas gefertigt ist. Der Sockel 12, weist eine durchgehende Referenzluftöffnung 14 auf, in welche ein Endabschnitt eines Glasrohrs 16 eingesetzt ist, wobei das Glasrohr 16 in der Referenzluftöffnung auf seiner Außenseite In den Sockel 12 verschmolzen ist, so dass die Referenzluft ausschließlich über einen Referenzluftpfad 18, der durch das Glasrohr verläuft, zur Messmembran 11 gelangt.

Der Sockel 12 ist an seiner dem Halbleiterwandlerkern abgewandten Seite mit einem metallischen Trägerkörper 20 mit einer Epoxydharz-Klebung 22, verklebt, wobei sich das Glasrohr 16 durch eine Öffnung im Trägerkörper 20 erstreckt. Auf einen durch den Trägerkörper 20 hindurchragenden Endabschnitt des Glasrohrs 16 ist ein Schlauch 24 insbesondere aus Silikonkautschuk aufgesteckt, durch welchen der Referenzluftpfad 18 verläuft. Auf diese Weise ist zuverlässig verhindert, dass die Klebung 22 der Referenzluft ausgesetzt wird.

Der Relativdrucksensor umfasst weiterhin einen hydraulischen Druckmittler mit einem Druckmittlerkörper 30 und einer flexiblen Trennmembran 32, die an einer Oberfläche des Druckmittlerkörpers 30 unter Bildung einer Druckkammer 34 zwischen dem Druckmittlerkörper 30 und der Trennmembran 32 befestigt ist, wobei der Druckmittlerkörper ferner eine Messzellenkammer 38 aufweist, in welcher die Druckmesszelle 10 angeordnet ist. Zwischen der Druckkammer 34 und der Messzellenkammer 38 erstreckt sich eine Bohrung 36, über den die dem Sockel 12 abgewandte, erste Seite der Messmembran 11 mit dem Mediendruck, der auf die Trennmembran einwirkt beaufschlagbar ist. Zur Druckübertragung sind die Druckkammer 34, die Bohrung 36 und das freie Volumen der Messzellenkammer 38 mit einer Übertragungsflüssigkeit gefüllt. Zur Fixierung der Druckmesszelle bezüglich des Druckmittlers und zum Verschließen der Messzellenkammer 38 ist der Trägerkörper 20 mit einem Druckmittlerkörper 30 verschweißt.

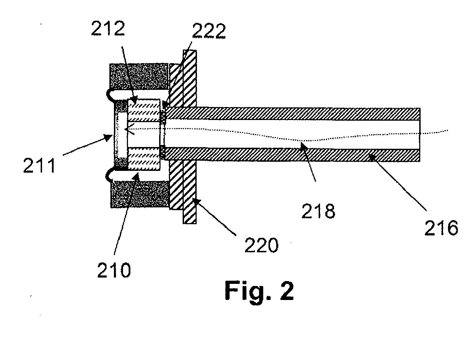

Fig. 2 zeigt kurz einen Relativdrucksensor nach dem Stand der Technik, wobei hier der Druckmittler zur Vereinfachung der Darstellung weggelassen wurde. Hier ist eine Druckmesszelle 210, die einen Wandlerkern 211 und Glassockel 212 aufweist, mit dem Glassockel mittels einer Epoxydharzklebung 222 an einem Trägerkörper 220 befestigt, der ein Referenzluftrohr 216 umfasst, wobei der Glassockel 212 auf die Stirnfläche des Rohres 216 geklebt ist. Damit ergibt sich, dass die Klebung 222 nicht vor der Referenzluft geschützt ist, sondern vielmehr Bestandteil der Wand des Referenzluftpfads 218 ist. Damit werden die mechanischen Eigenschaften der Klebung in Abhängigkeit von Feuchtigkeit und Temperatur verändert.

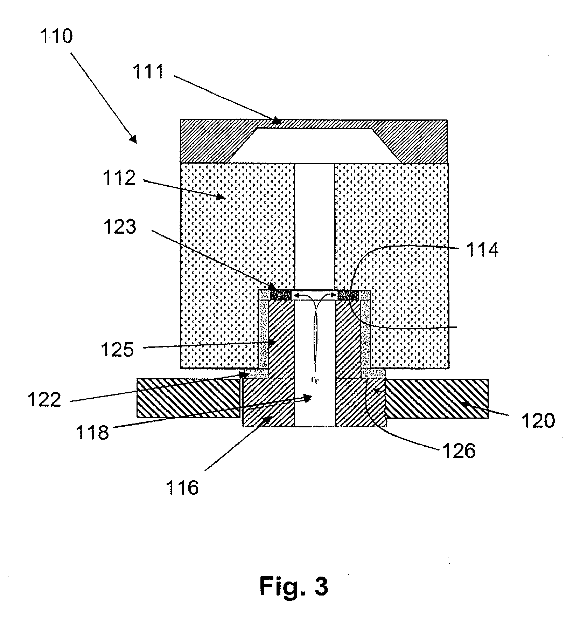

Das in Fig. 3 gezeigte, zweite Ausführungsbeispiel, eines Relativdrucksensors modifiziert das Konzept der Klebung auf der Stirnfläche eines Referenzluftrohrs. Der Relativdrucksensor umfasst eine Druckmesszelle 110, die einen piezoresistiven Wandlerkern mit Messmembran 111 und einen Siliziumsockel 112 aufweist, wobei der Wandlerkern entlang seines Randbereichs mit dem Siliziumsockel verbunden ist. Der Siliziumsockel 112 umfasst eine durchgehende Bohrung, durch welche Referenzluft zur Messmembran 111 gelangen kann. Die Bohrung weist in einem der Messmembran zugewandten Abschnitt einen ersten Durchmesser auf, an den ein zweiter Abschnitt anschließt, der einen zweiten Durchmesser aufweist, der größer ist als der erste Durchmesser, wobei sich der zweite Abschnitt bis zu einer der Messmembran abgewandten Oberfläche des Siliziumsockels 112 erstreckt. Zwischen dem ersten Abschnitt und dem zweiten Abschnitt ist damit eine radiale Stufe gebildet, die als erste axiale Anschlagfläche 114, für die Positionierung der Druckmesszelle 110 bezüglich des Trägerkörpers 120 dient. Der Trägerkörper umfasst ein Referenzluftrohr 116, welches gewissermaßen als hülsenförmiger Fortsatz gegenüber einer Oberfläche des Trägerkörpers hervorsteht, wobei das Referenzluftrohr in einem Endabschnitt 125 nach einer radialen Stufe einen verringerten Außendurchmesser aufweist, wobei der Außendurchmesser des Endabschnitts geringer ist, als der zweite Durchmesser der Bohrung in dem Siliziumsockel 112. Die radiale Stufe dient als zweite axiale Anschlagfläche 126, durch welche die Position der Druckmesszelle 110 bezüglich des Trägerkörpers 120 festgelegt wird. Der axiale Abstand von der zweiten axialen Anschlagfläche 126 zur Endfläche des Referenzluftrohrs 116 ist ungefähr gleich der Länge des zweiten Abschnitts der Bohrung durch den Siliziumsockel 112.

Zwischen der ersten Anschlagfläche 114 und der Endfläche des Referenzluftrohrs 116 ist eine ringförmige Feuchtebarriere 123 aus Silikonkautschuk vorgesehen. Damit ist eine drucktragende Klebung 122, die zunächst zwischen der Mantelfläche des Endabschnitts 125 des Referenzluftrohrs 116 und der Wand des zweiten Abschnitts der Bohrung und anschließend zwischen der zweiten Anschlagfläche 126 und einer Basisfläche des Siliziumsockels 112 verläuft, vor der feuchten Referenzluft geschützt.

Die drucktragende Klebung umfasst ein Epoxydharz. Insofern, als dieses vor dem Referenzluftpfad 118, der durch die Bohrung und durch das Referenzluftrohr 116 verläuft, mittels der Barriere 123 aus Silikonkautschuk geschützt ist, kann eine feuchteabhängige Beeinträchtigung der drucktragenden Klebung ausgeschlossen werden.

## Patentansprüche

1. Relativdrucksensor zum Erfassen eines Mediendrucks im Verhältnis zum umgebenden Atmosphärendruck, umfassend:
eine Druckmesszelle (10) mit einer Messmembran (11) und einem Sockel (12), wobei eine dem Sockel abgewandte erste Seite der Messmembran mit dem Mediendruck beaufschlagbar ist, und wobei der Sockel eine Referenzluftöffnung (14) aufweist, durch welche die dem Sockel zugewandte zweite Seite der Messmembran mit dem Atmosphärendruck in der Umgebung des Relativdrucksensors beaufschlagbar ist;
einen Trägerkörper (20), durch welchen ein Referenzluftkanal zwischen einem ersten Oberflächenabschnitt und einem zweiten Oberflächenabschnitt des Trägerkörpers verläuft,
wobei die Druckmesszelle (10) an dem Trägerkörper (20) mit einer druckfesten Klebung (22) fixiert ist,
wobei die Referenzluftöffnung (14) mit dem Referenzluftkanal kommuniziert um einen Referenzluftpfad (18) zur Messmembran zu bilden,
wobei die Klebung (22) den Referenzluftpfad (18) umschließt,
wobei der Relativdrucksensor weiterhin ein Schirmelement (16) aufweist, welches die Klebung (22) vor einem unmittelbaren Kontakt mit der Referenzluft schützt, **dadurch gekennzeichnet, dass** das Schirmelement ein Rohr umfasst, welches sich durch die Klebung erstreckt.

2. Relativdrucksensor nach Anspruch 1, wobei das Rohr ein Fortsatz des Sockels ist, und wobei die Referenzluftöffnung durch das Rohr verläuft.

3. Relativdrucksensor nach einem der Ansprüche 1 bis 2, wobei die Druckmesszelle weiterhin eine axiale Anschlagfläche aufweist, welche im wesentlichen senkrecht zur Achse des Rohrs bzw. der Referenzluftöffnung verläuft, und welche ggf. mit der zwischen liegenden Klebung die Position der Druckmesszelle bezüglich des Trägerkörpers definiert.

4. Relativdrucksensor nach einem der Ansprüche 1 bis 3, wobei sich das Rohr durch den Trägerkörper erstreckt.

5. Relativdrucksensor nach einem der Ansprüche 1 bis 4, wobei das Rohr an seinem der Messzelle abgewandten Endabschnitt mit einem Schlauch verbunden ist, durch den die Referenzluft zugeführt wird.

6. Relativdrucksensor nach einem der Ansprüche 1 bis 5, wobei die Klebung ein Epoxydharz aufweist.

7. Relativdrucksensor nach einem der vorherigen Ansprüche, wobei der Trägerkörper einen metallischen Werkstoff aufweist.

8. Relativdrucksensor nach Anspruch 1, wobei die Druckmesszelle einen Halbleitersensor mit einem piezo-resistiven Wandler, einem kapazitiven Wandler oder einem Wandler mit einem optischen oder mechanischen Resonator umfasst.

9. Relativdrucksensor nach einem der vorhergehenden Ansprüche, weiterhin umfassend, einen hydraulischen Druckmittler mit einem Druckmittlerkörßer und einer flexiblen Trennmembran, die an einer Oberfläche des Druckmittlerkörpers unter Bildung einer Druckkammer zwischen dem Druckmittlerkörper und der Trennmembran befestigt ist, wobei der Druckmittlerkörper ferner eine Messzellenkammer aufweist, in welcher die Druckmesszelle angeordnet ist, wobei sich zwischen der Druckkammer und der Messzellenkammer ein hydraulischer Pfad erstreckt, über den die erste Seite der Messmembran mit dem Mediendruck, der auf die Trennmembran einwirkt, beaufschagbar ist.

## Claims

1. Relative pressure sensor for recording a pressure of a medium in relation to the surrounding atmospheric pressure, comprising:
a pressure measuring cell (10) with a measuring membrane (11) and a base (12), wherein a first side of the measuring membrane which faces away from the base can be exposed to the medium pressure, and wherein the base has a reference air opening (14) through which the second side of the measuring membrane,
which faces towards the base, can be exposed to the atmospheric pressure in the environment of the relative pressure sensor;
a support body (20), through which a reference air channel runs between a first surface section and a second surface section of the support body,
wherein the pressure measuring cell (10) is fixed to the support body (20) by a pressure-resistant adhesive sealing (22),
wherein the reference air opening (14) communicates with the reference air channel in order to form a reference air path (18) to the measuring membrane,
wherein the adhesive sealing (22) surrounds the reference air path (18),
wherein the relative pressure sensor furthermore has a shielding element (16) which protects the adhesive sealing (22) from direct contact with the reference air,
**characterized in that**
the shielding element constitutes a tube which extends through the adhesive sealing.

2. Relative pressure sensor as claimed in Claim 1, wherein the tube is a continuation of the base, and wherein the reference air opening runs through the tube.

3. Relative pressure sensor as claimed in one of the Claims 1 to 2, wherein the pressure measuring cell furthermore has an axial stop surface which is essentially vertical to the axis of the tube or the reference air opening, and which defines the position of the pressure measuring cell in relation to the support body with the intermediary adhesive, where applicable.

4. Relative pressure sensor as claimed in one of the Claims 1 to 3, wherein the tube extends through the support body.

5. Relative pressure sensor as claimed in one of the Claims 1 to 4, wherein the tube is connected to a hose at the end section facing away from the measuring cell, through said tube the reference air is supplied.

6. Relative pressure sensor as claimed in one of the Claims 1 to 5, wherein the adhesive sealing is an epoxy resin.

7. Relative pressure sensor as claimed in one of the previous claims, wherein the support body has a metal material.

8. Relative pressure sensor as claimed in Claim 1, wherein the pressure measuring cell comprises a semi-conductor sensor with a piezo-resistive transducer, a capacitance transducer or a transducer with an optical or mechanical resonator.

9. Relative pressure sensor as claimed in one of the previous claims, further comprising a hydraulic diaphragm seal with a diaphragm seal body and a flexible process isolating diaphragm which is secured to a surface of the diaphragm seal body by forming a pressure chamber between the diaphragm seal body and the process isolating diaphragm, wherein the diaphragm seal body further comprises a measuring cell chamber in which the pressure measuring cell is arranged, wherein a hydraulic path extends between the pressure chamber and the measuring cell chamber, via said path the first side of the measuring membrane can be exposed to the medium pressure that acts on the process isolating diaphragm.

## Revendications

1. Capteur de pression relative destiné à la mesure d'une pression d'un produit par rapport à la pression atmosphérique environnante, comprenant :
une cellule de mesure de pression (10) avec une membrane de mesure (11) et un socle (12), capteur pour lequel un premier côté de la membrane de mesure, situé à l'opposé du socle, peut être soumis à la pression du produit, et le socle présente une ouverture d'air de référence (14), à travers laquelle le deuxième côté de la membrane de mesure, faisant face au socle, peut être soumis à la pression atmosphérique régnant dans l'environnement du capteur de pression relative ;
un corps support (20), à travers lequel un canal d'air de référence s'étend entre une première section de surface et une deuxième section de surface du corps support,
la cellule de mesure de pression (10) étant fixée au corps support (20) au moyen d'un collage (22) résistant à la pression,
l'ouverture d'air de référence (14) communiquant avec le canal d'air de référence afin de former un circuit d'air de référence (18) vers la membrane de mesure,
le collage (22) entourant le circuit d'air de référence (18),
le capteur de pression relative présentant en outre un élément de blindage (16),
qui protège le collage (22) par rapport à un contact direct avec l'air de référence,
**caractérisé**
**en ce que** l'élément de blindage comprend un tube, qui s'étend à travers le collage.

2. Capteur de pression relative selon la revendication 1, pour lequel le tube est un prolongement du socle, et pour lequel l'ouverture d'air de référence s'étend à travers le tube.

3. Capteur de pression relative selon l'une des revendications 1 à 2, pour lequel la cellule de mesure de pression présente en outre une surface de butée axiale, laquelle s'étend pour l'essentiel perpendiculairement à l'axe du tube ou de l'ouverture d'air de référence, et laquelle définit avec le collage intermédiaire la position de la cellule de mesure de pression par rapport au corps support.

4. Capteur de pression relative selon l'une des revendications 1 à 3, pour lequel le tube s'étend à travers le corps support.

5. Capteur de pression relative selon l'une des revendications 1 à 4, pour lequel le tube est relié, au niveau de sa partie finale située à l'opposé de la cellule de mesure, avec un tuyau flexible, à travers lequel est alimenté l'air de référence.

6. Capteur de pression relative selon l'une des revendications 1 à 5, pour lequel le collage est une résine époxy.

7. Capteur de pression relative selon l'une des revendications précédentes, pour lequel le corps support est constitué d'un matériau métallique.

8. Capteur de pression relative selon la revendication 1, pour lequel la cellule de mesure de pression comprend un capteur à semi-conducteur doté d'un transducteur piézorésistif, d'un transducteur capacitif ou d'un transducteur muni d'un résonateur optique ou mécanique.

9. Capteur de pression relative selon l'une des revendications précédentes, comprenant en outre un séparateur hydraulique doté d'un corps de séparateur et d'une membrane de séparation flexible, qui est fixée sur une surface du corps de séparateur en formant une chambre de pression entre le corps de séparateur et la membrane de mesure, le corps de séparateur présentant en outre une chambre de cellule de mesure, dans laquelle est disposée la cellule de mesure de pression, un circuit hydraulique s'étendant entre la chambre de pression et la chambre de cellule de mesure, circuit à travers lequel le premier côté de la membrane de mesure peut être soumis à la pression du produit, qui agit sur la membrane de séparation.
